## Europäisches Patentamt
## European Patent Office
## Office européen des brevets

(11) Veröffentlichungsnummer: **0 378 723**
**A1**

# EUROPÄISCHE PATENTANMELDUNG

(21) Anmeldenummer: **89100895.5**

(22) Anmeldetag: **19.01.89**

(51) Int. Cl.⁵: **D06F 37/30, H02P 7/638**

(43) Veröffentlichungstag der Anmeldung:
**25.07.90 Patentblatt 90/30**

(84) Benannte Vertragsstaaten:
**DE FR IT**

(71) Anmelder: **Siemens Aktiengesellschaft**
**Wittelsbacherplatz 2**
**D-8000 München 2(DE)**

(72) Erfinder: **Winter, Udo, Dr.**
**Heinrich-Lübkestrasse 19**
**D-8702 Kürnach(DE)**
Erfinder: **Harbauer, Werner, Dipl.-Ing.**
**Flurleinstrasse 10**
**D-8702 Kürnach(DE)**
Erfinder: **Wähner, Ludwig, Dipl.-Ing.**
**Kettenstrasse 15**
**D-8700 Würzburg(DE)**

(54) **Waschautomatenantrieb.**

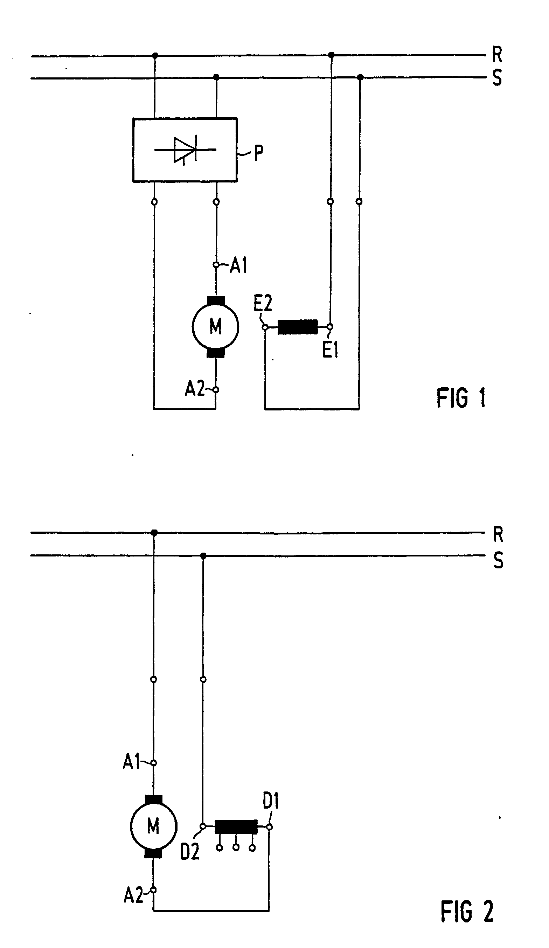

(57) Zur Minderung des Aufwandes an elektrischen und/oder elektronischen Bauelementen bei einem über eine Phasenanschnittssteuerung (P) geregelten elektrischen Antriebs-Kommutatormotor (M) wird dieser im Waschbetrieb (FIG 1) als Nebenschlußmotor mit direkt an das speisende Einphasen-Wechselstromnetz (R,S) angeschlossener Erregerwicklung (E1-E2) sowie dazu paralleler, im Sinne einer Grundschwingungs- Phasengleichheit phasenanschnittsgesteuerter Ankerwicklung (A1-A2) und im Schleuderbetrieb (FIG 2) als Reihenschlußmotor mit in Reihe geschalteter Ankerwicklung (A1-A2) und ggf. mit Wicklungsanzapfung zur Einstellung verschiedener Schleuderdrehzahlen versehener Erregerwicklung (D1-D2) betrieben.

FIG 1

FIG 2

# Waschautomatenantrieb

Die Erfindung bezieht sich auf einen Waschautomatenantrieb gemäß Oberbegriff des Anspruchs 1; ein derartiger Antrieb ist aus der DE-A1-25 15 792 bekannt.

Bei dem bekannten Waschautomatenantrieb wird der Antriebsmotor sowohl im Schleuderbetrieb als auch im Waschbetrieb als Reihenschlußmotor mit in Reihe geschalteter Ankerwicklung und Erregerwicklung betrieben. Um im Waschbetrieb eine Drehzahlkonstanz zu erreichen, wird die jeweils aktuelle Drehzahl des Antriebsmotors über einen Tachogenerator erfaßt und über ein elektronisches Stellglied in eine Steuerspannung zur Anschnittsteuerung des Antriebsmotors umgesetzt.

Durch die DE-C2-23 16 237 ist weiterhin eine Steuerschaltung zum Betreiben eines Gleichstrommotors aus einer Gleichstromquelle mit einer Umschaltanordnung bekannt, durch die der Gleichstrommotor als Reihenschlußmotor oder als Nebenschlußmotor schaltbar ist; durch eine Pulssteuerung ist der Motorstrom sowohl im Reihenschlußbetrieb als auch der Erregerstrom im Nebenschlußbetrieb einstellbar, wobei die Pulssteuerung beim Übergang vom Reihen- zum Nebenschlußbetrieb das Verhältnis der Einschalt- zur Ausschaltzeit umkehrt.

Gemäß Aufgabe vorliegender Erfindung soll ausgehend von einem Waschautomatenantrieb der eingangs genannten Art einerseits im Waschbetrieb eine hohe Drehzahlkonstanz gewährleistet werden und trotzdem der Aufwand, insbesondere hinsichtlich der notwendigen elektrischen und elektronischen Bauelemente, gemindert werden können.

Die Lösung dieser Aufgabe ist erfindungsgemäß durch die Lehre des Anspruchs 1 möglich; vorteilhafte Ausgestaltungen der Erfindung sind jeweils Gegenstand der Unteransprüche.

Beim erfindungsgemäßen Waschautomatenantrieb kann bei aufgrund des Nebenschlußverhaltens des Antriebsmotors im Waschbetrieb gewährleisteter hoher Drehzahlkonstanz einerseits auf das Bauelement eines gesonderten Tachogenerators verzichtet und aufgrund der direkt an das speisende Einphasen-Wechselstromnetz angeschlossenen Erregerwicklung und des lediglich über die Phasenanschnittssteuerung zu steuernden Ankerstroms der Aufwand an elektronischen Bauelementen gemindert werden.

Zur Gewährleistung eines günstigen Wirkungsgrades des Antriebsmotors sieht eine Ausgestaltung der Erfindung eine Auslegung und Phasenanschnittssteuerung der Ankerwicklung im Sinne einer Grundschwingungsphasengleichheit zwischen dem Erregerstrombelag und dem Ankerstrombelag im Waschbetrieb vor, wobei der derart bestimmte Zündwinkel zur weiteren Aufwandsminderung zweckmäßigerweise als konstanter Phasenanschnittswinkel auch im Dauerbetriebspunkt im Waschbetrieb beibehalten wird. Gleichzeitig wird die Phasenanschnittssteuerung zur Vorgabe bzw. Begrenzung des Anlaufstromes mitbenutzt. Zur Erzielung unterschiedlicher Drehzahlen im Schleuderbetrieb ist nach einer weiteren Ausgestaltung die im Schleuderbetrieb mit der Ankerwicklung in Reihe geschaltete Erregerwicklung mit unterschiedlichen Wicklungsanzapfungen versehen.

Die Erfindung wird im folgenden anhand eines in der Zeichnung schematisch dargestellten Ausführungsbeispiels näher erläutert; darin zeigen:

FIG 1 das Prinzipschaltbild des Waschautomatenantriebs im Waschbetrieb (Nebenschlußverhalten);

FIG 2 das Prinzipschaltbild des Waschautomatenantriebs im Schleuderbetrieb (Reihenschlußverhalten).

FIG 1 zeigt das Prinzipschaltbild des Kommutator-Antriebsmotors M im Waschbetrieb mit unmittelbar an das speisende Einphasen-Wechselstromnetz R,S angeschlossener Erregerwicklung E1-E2 und über eine Phasenanschnittssteuerung P an das speisende Einphasen-Wechselstromnetz R,S angeschlossener Ankerwicklung A1-A2.

Die lediglich zur Steuerung bzw. Regelung des Ankerstroms auszulegende Phasenanschnittssteuerung P dient zur Vorgabe des Anzugsmoment bzw. des Anzugsstromes bei einem Anschnittswinkel, der möglichst eine Phasengleichheit der Grundschwingung des Ankerstrombelags mit dem des Erregerstromes gewährleistet, wobei vorteilhafterweise der dazu zweckmäßige Zündwinkel auch im Arbeitspunkt des Waschbetriebes beibehalten wird.

FIG 2 zeigt das Prinzipschaltbild des Kommutator-Antriebsmotors im Schleuderbetrieb mit in Reihe an das speisende Einphasen-Wechselstromnetz R,S angeschlossener Ankerwicklung A1-A2 und Erregerwicklung D1-D2. Zur Erzielung verschiedener Schleuderdrehzahlen ist die Erregerwicklung D1-D2 mit mehreren Anzapfungen versehen.

## Ansprüche

1. Waschautomatenantrieb mit einem aus einem Einphasen-Wechselstromnetz (R,S) über ein Stromstellglied gespeisten elektrischen Kommutator-Antriebsmotor (M) mit in Reihe geschalteter Erregerwicklung (D1-D2) und Ankerwicklung (A1-A2) für den Schleuderbetrieb, **gekennzeichnet** durch eine Auslegung und Umschaltung der Wicklung des Kommutator-Antriebsmotors (M) im Waschbetrieb im Sinne eines Nebenschlußmotors mit direkt an das speisende Einphasen-Wechselstromnetz (R,S) angeschlossener Erregerwicklung (E1-E2) und dazu parallel geschalteter, über eine Phasenanschnittssteuerung (P) gesteuerter Ankerwicklung (A1-A2).

2. Waschautomatenantrieb nach Anspruch 1, **gekennzeichnet** durch eine Auslegung und Ansteuerung der Phasenanschnittssteuerung (P) im Sinne einer Grundschwingungsphasengleichheit zwischen dem Erregerstrombelag und dem Ankerstrombelag im Waschbetrieb.

3. Waschautomatenantrieb nach Anspruch 1 und/oder 2, **gekennzeichnet** durch eine Vorgabe des Anlaufstromes durch die Phasenanschnittssteuerung (P).

4. Waschautomatenantrieb nach einem der Ansprüche 1 bis 3, **gekennzeichnet** durch einen konstanten Phasenanschnittswinkel im Waschbetrieb-Dauerbetriebspunkt.

5. Waschautomatenantrieb nach einem der Ansprüche 1 bis 4, **gekennzeichnet** durch eine Drehzahländerung im Schleuderbetrieb durch unterschiedliche Wicklungsanzapfung der Erregerwicklung (D1-D2).

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2515792 (LICENTIA PATENT-VERWALTUNGS-GMBH) * das ganze Dokument * --- | 1 | D06F37/30 H02P7/638 |
| A | FR-A-2245796 (SIEMENS AG) * das ganze Dokument * --- | 1 | |
| D,A | DE-A-2316237 (GENERAL ELECTRIC COMP.) ----- | | |

|  |
|---|
| **RECHERCHIERTE SACHGEBIETE (Int. Cl.5)** |
| D06F H02P |

Der vorliegende Recherchenbericht wurde für alle Patentansprüche erstellt

| Recherchenort | Abschlußdatum der Recherche | Prüfer |
|---|---|---|
| DEN HAAG | 22 AUGUST 1989 | BEYER F. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................
& : Mitglied der gleichen Patentfamilie, übereinstimmendes Dokument